# EUROPÄISCHE PATENTSCHRIFT

(11) **EP 0 889 816 B1**
(45) Veröffentlichungstag und Bekanntmachung des Hinweises auf die Patenterteilung: **06.08.2003**
(21) Anmeldenummer: 97918083.3
(22) Anmeldetag: 27.03.1997
(51) Int. Cl.: B60T 13/14, B60T 8/48, B60T 8/40

(54) **BLOCKIERGESCHÜTZTE HYDRAULISCHE KRAFTFAHRZEUGBREMSANLAGE**
ANTI-LOCKING HYDRAULIC MOTOR VEHICLE BRAKE SYSTEM
INSTALLATION DE FREINAGE HYDRAULIQUE A DISPOSITIF ANTIBLOCAGE POUR VEHICULES A MOTEUR

(30) Priorität: 06.04.1996 DE 19613903
(43) Veröffentlichungstag der Anmeldung: 13.01.1999
(73) Patentinhaber: Continental Teves AG & Co. oHG, 60488 Frankfurt (DE)
(72) Erfinder: STEFFES, Helmut, D-65795 Hattersheim (DE)
(74) Vertreter: Blum, Klaus-Dieter
(86) Internationale Anmeldenummer: EP9701577
(87) Internationale Veröffentlichungsnummer: WO97037879

(56) Entgegenhaltungen:
- DE-A- 3 413 626
- DE-A- 3 607 366
- DE-A- 4 106 336
- DE-A- 4 425 578

## Beschreibung

Die Erfindung betrifft eine blockiergeschützte hydraulische Kraftfahrzeugbremsanlage nach dem Oberbegriff des Patentanspruchs 1.

Aus der DE 44 25 578 A1 ist bereits eine blockiergeschützte Kraftfahrzeugbremsanlage bekannt geworden, bei der ein unabhängig vom Fahrerwillen betätigbarer pneumatischer Bremskraftverstärker sowie ein dem Bremskraftverstärker nachgeschalteter Hauptbremszylinder mit einem eine Pumpe aufweisenden ABS-Hydroaggregat verbunden ist, an das die einzelnen Radbremsen der Fahrzeugräder angeschlossen sind. Beim Eintritt in die Bremsdruckregelung wird der Bremskraftverstärker unabhängig vom Fahrerwillen angesteuert, um ein Vorfüllen der Radbremsen zu erreichen, wobei nach der Beendigung des Vorfüllvorganges der weitere Druckaufbau in den Radbremsen mit der Pumpe erfolgt. Der unabhängig vom Fahrerwillen anzusteuernde Bremskraftverstärker ist hinsichtlich seiner Konstruktion entsprechend auszulegen und bedarf entsprechender elektrischer Ansteuermaßnahmen zur Fremdkraftbetätigung des Steuerteils im Bremskraftverstärker.

Ein Nachteil ist darin zu sehen, daß während des Pumpenbetriebs saugseitig störende Pulsationen auftreten.

Daher ist es die Aufgabe der vorgeschlagenen Erfindung, eine blockiergeschützte Kraftfahrzeugbremsanlage der angegebenen Art dahingehend zu verbessern, daß sich mit relativ geringem Mitteleinsatz die saugseitigen Pumpenpulsationen nicht mehr störend in Richtung des Hauptbremszylinders ausbreiten können.

Diese Aufgabe wird erfindungsgemäß für eine blockiergeschützte Kraftfahrzeugbremsanlage der gattungsbildenden Art mit den kennzeichnenden Merkmalen des Patentanspruchs 1 gelöst.

Weitere Merkmale, Vorteile und Anwendungsmöglichkeiten der Erfindung gehen im nachfolgenden anhand der Beschreibung eines Ausführungsbeispiels hervor.

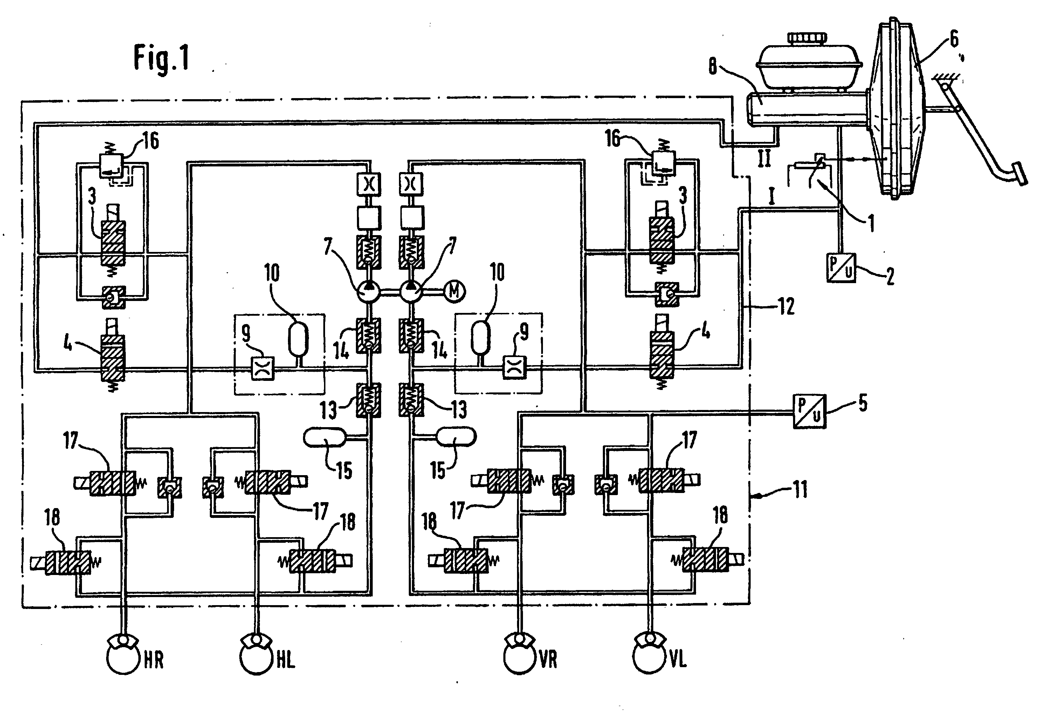

Es zeigt hierzu die einzige Fig. 1 den schematischen und schaltungstechnischen Aufbau einer zweikreisigen blockiergeschützten Kraftfahrzeugbremsanlage. Diese besteht aus einem ausschließlich abhängig vom Fahrerpedal betätigbaren pneumatischen Bremskraftverstärker 6, an dem ein Hauptbremszylinder 8 angeflanscht ist, an dessen Druckräume über ein eine Pumpe 7 aufweisendes ABS-Hydroaggregat 11 mehrere den Fahrzeugrädern zugeordnete Radbremsen HR, HL, VR, VL angeschlossen sind. Erfindungsgemäß sind Mittel 1,2,3,4,5 vorgesehen, die die Betätigung des Bremskraftverstärkers 6 erfassen, die Pumpe 7 steuern und eine hydraulische Verbindung zwischen dem Hauptbremszylinder 8 und der Saugseite der Pumpe 7 herstellen. Der Pedalweg bzw. der Membranweg wird zur Erfassung der Betätigung des Bremskraftverstärkers 6 von einem Wegsensor 1 aufgenommen. Als weiteres Mittel befindet sich in der hydraulischen Verbindung zwischen dem Hauptbremszylinder 8 und der Saugseite der Pumpe 7 ein in der Grundstellung geschlossenes Mehrwegeventil 4, das in einer Leitungsabzweigung 12 eingesetzt ist, die zwischen einem Einströmventil 3 und dem Hauptbremszylinder 8 an die zu den Radbremsen HR, VR, HL, VL führende hydraulische Verbindung angeschlossen ist. In der Offenstellung des Mehrwegeventils 4 ist die Druckseite der Pumpe 7 vom Hauptbremszylinder 8 mittels dem Einströmventil 3 getrennt. Ferner befindet sich an einem Druckanschluß des Hauptbremszylinders 8 ein Drucksensor 2, der in Abhängigkeit der Pedalbetätigung den Druck im Hauptbremszylinder 8 erfaßt. An der Druckseite der Pumpe 7 ist ein weiterer Drucksensor 5 angebracht, der mit dem Drucksensor 2 am Hauptbremszylinder 8 an einen elektronischen Vergleicher einer Auswerteeinheit angeschlossen ist. Damit kann vorteilhaft der Förderdruck bzw, die Fördermenge der Pumpe 7 in Abhängigkeit der im Vergleicher ausgewerteten Signale beider Drucksensoren 2,5 beeinflußt werden. Um die Pulsation der Pumpe 7 in Richtung des Hauptbremszylinders 8 zu dämpfen, ist zwischen dem in Grundstellung geschlossenen Mehrwegeventil 4 und der Saugseite der Pumpe 7 in der hydraulischen Verbindung eine Blende 9 und ein Druckmittelspeicher 10 angeordnet. Weiterhin sind vor den Radbremsen HR, HL, VR, VL stromabwärts zu jedem Einströmventil 3 in den beiden Bremskreisen I,II elektromagnetische Druckregelventile 17,18 eingefügt, die die Radbremsen HR, HL, VR, VL entweder mit dem Hauptbremszylinder 8 oder mit der Saugseite der doppelflutigen Pumpe 7 verbinden. Vor und hinter dem hydraulischen Anschluß des Mehrwegeventils 4 an die Saugseite der Pumpe 7 befinden sich in der Saugleitung der Pumpe 7 in Richtung der Pumpe 7 öffnende Rückschlagventile 13,14. Von den Radbremsen HR, HL, VR, VL abgelassenes Überschuß-Druckmittelvolumen kann jeweils in einem Niederdruckspeicher 15 aufgefangen und bei Bedarf dem Druckkreis der Pumpe 7 zugeführt werden. Ein an der Druckseite der Pumpe 7 angeschlossenes Überdruckventil 16 begrenzt hierbei den zulässigen Systemdruck in der Anlage.

Im nachfolgenden wird auf die Funktionsweise der Bremsanlage eingegangen. Die abgebildeten Ventilpositionen in Fig. 1 entsprechen zunächst der Bremslöse- als auch radschlupffreien Normalbremsstellung. Wird das Bremspedal betätigt, so wird das im Hauptbremszylinder 8 befindliche Druckmittel über das elektromagnetisch nicht erregte, offene Einströmventil 3 eines jeden Bremskreises I,II zu den offenen Druckregelventilen 17 und damit zu den Radbremsen HR, HL, VR, VL verdrängt. Das Mehrwegeventil 4 verharrt zunächst elektromagnetisch unerregt in Sperrstellung. Gleichfalls bleiben die als Auslaßventile wirksamen Druckregelventile 18 elektromagnetisch unerregt in Sperrstellung, so daß die Saugseite der Pumpe 7 zunächst drucklos verharrt. Beim Erkennen von unzulässigen Radschlupfsignalen anhand einer in der Abbildung nicht gezeigten Auswerteelektronik wird mittels des für die Betätigung des Bremskraftverstärkers 6 repräsentativen Signals des Wegsensors 1 die Pumpe 7 elektrisch angesteuert und die Saugseite der Pumpe 7 über das nunmehr elektromagnetisch in Offenstellung geschaltete Mehrwegeventil 4 mit den Druckräumen des Hauptbremszylinders 8 hydraulisch verbunden. Gleichfalls schaltet das Einströmventil 3 eines jeden Bremskreises I,II in seine Sperrstellung, womit die Druckseite der Pumpe 7 von den zum Hauptbremszylinder 8 führenden Bremsleitungen entkoppelt ist und diese das Druckmittel ausschließlich in Richtung der Radbremsen HR, HL, VR, VL fördert. Durch den nunmehr vorliegenden Anschluß der Saugseite der Pumpe an den Hauptbremszylinder 8 wird bei weiterer Pedalbetätigung die Pumpe 7 fußkraftproportional vorgeladen. Die Pumpe 7 bringt das Druckmittel auf ein höheres Druckniveau, das den Radbremszylindern, HR, HL, VR, VL zugeführt wird. Anhand des den Hauptbremszylinderdruck erfassenden Drucksensors 2 und des den Pumpendruck erfassenden Drucksensors 5 kann durch Vergleich beider Drucksignale in einer in der Abbildung nicht dargestellten Auswerteeinheit die Pumpenleistung nach Bedarf variiert werden. Neigt ein Fahrzeugrad zum Blockieren, so wird wie bereits allgemein bekannt, über die als Auslaßventile wirksamen Druckregelventile 18 Druckmittelvolumen aus den Radbremsen abgelassen und jeweils dem Niederdruckspeicher 15 zugeführt. Dieses Druckmittelvolumen muß durch die Pumpe 7 aus dem Niederdruckspeicher 15 abgepumpt werden, wozu in der Druckabbauphase einer Blokkierdruckregelung das Mehrwegeventil 4 erneut in Sperrstellung schaltet, bis der Niederdruckspeicher 13 entleert ist. Pumpenpulsationen bleiben durch die Anordnung des Druckmittelspeichers 10 und der Blende 9 weitgehend rückwirkungsfrei auf das Pedal, obwohl während der pedalkrafterzeugten Vorladung quasi eine steife Druckmittelsäule zwischen der Saugseite der Pumpe 7 und dem Hauptbremszylinder 8 eingespannt ist. Durch die vorgeschlagene Bremsanlage kann somit eine Einstellung des Bremsdruckes in den Radzylindern über die vom Pedal der Pumpe 7 zugeführte Druckmittelmenge erreicht werden. Eine Rückstellung des Pedals durch den Fahrer, wird vom Wegsensor 1 und vom Drucksensor 2 registriert, die Pumpe 7 stillgelegt und das Einströmventil 3 und das Mehrwegeventil 4 in die abbildungsgemäße Grundstellung geschaltet. Bei entsprechender Auslegung des Drucksensors 2 mit erheblich feinerem Meßbereich bei niedrigen Bremsdrücken (Ansprechverhalten), kann auf den Wegsensor 1 verzichtet werden.

### Bezugszeichenliste

- 1: Wegsensor
- 2: Drucksensor
- 3: Einströmventil
- 4: Mehrwegeventil
- 5: Drucksensor
- 6: Bremskraftverstärker
- 7: Pumpe
- 8: Hauptbremszylinder
- 9: Blende
- 10: Druckmittelspeicher
- 11: Hydroaggregat
- 12: Leitungsabzweigung
- 13: Rückschlagventil
- 14: Rückschlagventil
- 15: Niederdruckspeicher
- 16: Überdruckventil
- 17: Druckregelventil
- 18: Druckregelventil
- I,II: Bremskreis

## Patentansprüche

1. Blockiergeschützte, hydraulische Kraftfahrzeugbremsanlage, mit einem abhängig vom Fahrer betätigbaren pneumatischen Bremskraftverstärker (6) sowie mit einem dem Bremskraftverstärker (6) nachgeschalteten Hauptbremszylinder (8), an dessen Druckräume über ein eine Pumpe (7) aufweisendes ABS-Hydroaggregat (11) mehrere den Fahrzeugrädern zugeordnete Radbremsen (HR, HL, VR, VL) angeschlossen sind, mit Mitteln (1,2,3,4,5), die die Betätigung des Bremskraftverstärkers (6) erfassen, die Pumpe (7) steuern und eine hydraulische Verbindung zwischen dem Hauptbremszylinder (8) und der Saugseite der Pumpe (7) herstellen, wobei als Mittel zur Herstellung der hydraulischen Verbindung zwischen dem Hauptbremszylinder (8) und der Saugseite der Pumpe (7) ein Mehrwegeventil (4) vorgesehen ist, das in einer Leitungsabzweigung (12) eingesetzt ist, die zwischen einem Einströmventil (3) und dem Hauptbremszylinder (8) in einen Bremskreis (I,II) einmündet, der zu den Radbremsen (HR, VR, HL, VL) führt, **dadurch gekennzeichnet, daß** zwischen dem Mehrwegeventil (4) und der Saugseite der Druckmittelpumpe (7) in die hydraulische Verbindung eine Blende (9) angeordnet ist.

2. Blockiergeschützte, hydraulische Kraftfahrzeugbremsanlage nach Anspruch 1, **dadurch gekennzeichnet, daß** als Mittel zur Aktivierung der Pumpe (7) ein Wegsensor (1) vorgesehen ist, der die Betätigung des Bremskraftverstärkers (6) erfaßt.

3. Blockiergeschützte, hydraulische Kraftfahrzeugbremsanlage nach Anspruch 1, **dadurch gekennzeichnet, daß** Mehrwegeventil (4) ein in der Grundstellung geschlossenes Ventil ist.

4. Blockiergeschützte, hydraulische Kraftfahrzeugbremsanlage nach Anspruch 3, **dadurch gekennzeichnet, daß** in Offenstellung des Mehrwegeventils (4) die Druckseite der Pumpe (7) vom Hauptbremszylinder (8) getrennt ist.

5. Blockiergeschützte, hydraulische Kraftfahrzeugbremsanlage nach Anspruch 1, **dadurch gekennzeichnet, daß** an einem Druckanschluß des Hauptbremszylinders (8) ein Drucksensor (2) angebracht ist, der in Abhängigkeit der Pedalbetätigung den Druck im Hauptbremszylinder (8) erfaßt.

6. Blockiergeschützte, hydraulische Kraftfahrzeugbremsanlage nach Anspruch 1, **dadurch gekennzeichnet, daß** an der Druckseite der Pumpe (7) ein Drucksensor (5) angebracht ist.

7. Blockiergeschützte, hydraulische Kraftfahrzeugbremsanlage nach Anspruch 5 oder 6, **dadurch gekennzeichnet, daß** beide Drucksensoren (2,5) an einem elektronischen Vergleicher einer Auswerteeinheit angeschlossen sind.

8. Blockiergeschützte, hydraulische Kraftfahrzeugbremsanlage nach Anspruch 7, **dadurch gekennzeichnet, daß** der Förderdruck der Pumpe (7) in Abhängigkeit der im Vergleicher ausgewerteten Signale beider Drucksensoren (2,5) eingestellt ist.

9. Blockiergeschützte, hydraulische Kraftfahrzeugbremsanlage nach Anspruch 1, **dadurch gekennzeichnet, daß** die zwischen dem Mehrwegeventil (4) und der Saugseite der Pumpe (7) angeordnete Blende (9) in Kombination mit einem Druckmittelspeicher (10) angeordnet ist, um die Pulsation der Pumpe (7) in Richtung des Hauptbremszylinders (8) dämpfen.

## Claims

1. Anti-lock hydraulic automotive vehicle brake system which includes a pneumatic brake force booster (6) operable in response to the driver and a master brake cylinder (8) connected downstream of the brake force booster (6) and having pressure chambers to which several wheel brakes (HR, HL, VR, VL) associated with the vehicle wheels are connected by way of an ABS hydraulic unit (11) including a pump (7), with means (1, 2, 3, 4, 5) that sense the actuation of the brake force booster (6), control the pump (7) and constitute a hydraulic connection between the master brake cylinder (8) and the suction side of the pump (7), wherein as a means for establishing the hydraulic connection between the master brake cylinder (8) and the suction side of the pump (7), there is provided a multi-way valve (4) being inserted into a line branch (12) that opens between an inlet valve (3) and the master brake cylinder (8) into a brake circuit (I, II) which leads to the wheel brakes (HR, VR, HL, VL),
**characterized in that** an orifice (9) is inserted into the hydraulic connection between the multi-way valve (4) and the suction side of the pressure fluid pump (7).

2. Anti-lock hydraulic automotive vehicle brake system as claimed in claim 1,
**characterized in that** a travel sensor (1) which senses the actuation of the brake force booster (6) is provided as a means for activating the pump (7).

3. Anti-lock hydraulic automotive vehicle brake system as claimed in claim 1,
**characterized in that** the multi-way valve (4) is a valve which is closed in its initial position.

4. Anti-lock hydraulic automotive vehicle brake system as claimed in claim 3,
**characterized in that** the pressure side of the pump (7) is separated from the master brake cylinder (8) in the open position of the multi-way valve (4).

5. Anti-lock hydraulic automotive vehicle brake system as claimed in claim 1,
**characterized in that** a pressure sensor (2) which senses the pressure in the master brake cylinder (8) as a function of the pedal application is mounted at a pressure port of the master brake cylinder (8).

6. Anti-lock hydraulic automotive vehicle brake system as claimed in claim 1,
**characterized in that** a pressure sensor (5) is mounted on the pressure side of the pump (7).

7. Anti-lock hydraulic automotive vehicle brake system as claimed in claim 5 or 6,
**characterized in that** both pressure sensors (2, 5) are connected to an electronic comparator of an evaluating unit.

8. Anti-lock hydraulic automotive vehicle brake system as claimed in claim 7,
**characterized in that** the supply pressure of the pump (7) is adjusted as a function of the signals of both pressure sensors (2, 5) evaluated in the comparator.

9. Anti-lock hydraulic automotive vehicle brake system as claimed in claim 1,
**characterized in that** the orifice (9) which is interposed between the multi-way valve (4) and the suction side of the pump (7) is arranged in combination with a pressure fluid accumulator (10) in order to dampen the pulsation of the pump (7) in the direction of the master brake cylinder (8).

## Revendications

1. Dispositif de freinage hydraulique antiblocage pour véhicule automobile, comprenant un amplificateur de force de freinage (6) pneumatique pouvant être actionné d'une manière dépendant du conducteur, un maître-cylindre de frein (8) qui est branché en aval de l'amplificateur de force de freinage (6) et aux chambres de pression duquel plusieurs freins de roue (HR, HL, VR, VL) associés aux roues du véhicule sont raccordés par l'intermédiaire d'un ensemble hydraulique ABS (11) comportant une pompe (7), des moyens (1, 2, 3, 4, 5) qui détectent l'actionnement de l'amplificateur de force de freinage (6), commandent la pompe (7) et créent une liaison hydraulique entre le maître-cylindre de frein (8) et le côté aspiration de la pompe (7), tandis qu'en tant que moyens permettant de créer la liaison hydraulique entre le maître-cylindre de frein (8) et le côté aspiration de la pompe (7), il est prévu une valve à plusieurs voies (4) qui est montée dans une ligne de dérivation (12) qui débouche, entre une valve d'entrée d'écoulement (3) et le maître-cylindre de frein (8), dans un circuit de frein (I, II) qui mène aux freins de roue (HR, VR, HL, VL), **caractérisé en ce qu'**une restriction (9) est disposée dans la liaison hydraulique, entre la valve à plusieurs voies (4) et le côté aspiration de la pompe d'agent de pression (7).

2. Dispositif de freinage hydraulique antiblocage pour véhicule automobile suivant la revendication 1, **caractérisé en ce qu'**en tant que moyens pour l'activation de la pompe (7), il est prévu un capteur de course (1) qui détecte l'actionnement de l'amplificateur de force de freinage (6).

3. Dispositif de freinage hydraulique antiblocage pour véhicule automobile suivant la revendication 1, **caractérisé en ce que** la valve à plusieurs voies (4) est une valve fermée dans la position de base.

4. Dispositif de freinage hydraulique antiblocage pour véhicule automobile suivant la revendication 3, **caractérisé en ce que**, dans la position ouverte de la valve à plusieurs voies (4), le côté refoulement de la pompe (7) est isolé vis-à-vis du maître-cylindre de frein (8).

5. Dispositif de freinage hydraulique antiblocage pour véhicule automobile suivant la revendication 1, **caractérisé en ce qu'**est monté sur un raccordement de refoulement du maître-cylindre de frein (8) un capteur de pression (2) qui détecte, en fonction de l'actionnement de la pédale, la pression dans le maître-cylindre de frein (8).

6. Dispositif de freinage hydraulique antiblocage pour véhicule automobile suivant la revendication 1, **caractérisé en ce qu'**un capteur de pression (5) est monté sur le côté refoulement de la pompe (7).

7. Dispositif de freinage hydraulique antiblocage pour véhicule automobile suivant la revendication 5 ou 6, **caractérisé en ce que** les deux capteurs de pression (2, 5) sont raccordés à un comparateur électronique d'une unité d'analyse.

8. Dispositif de freinage hydraulique antiblocage suivant la revendication 7, **caractérisé en ce que** la pression de refoulement de la pompe (7) est réglée en fonction des signaux, analysés dans le comparateur, des deux capteurs de pression (2, 5).

9. Dispositif de freinage hydraulique antiblocage pour véhicule automobile suivant la revendication 1, **caractérisé en ce que** la restriction (9) disposée entre la valve à plusieurs voies (4) et le côté aspiration de la pompe (7) est disposée en combinaison avec un accumulateur d'agent de pression (10), afin d'amortir la pulsation de la pompe (7) en direction du maître-cylindre de frein (8).
